# FASCICULE DE BREVET EUROPEEN

(11) **EP 2 209 608 B1**
(45) Date de publication et mention de la délivrance du brevet: **14.12.2011**
(21) Numéro de dépôt: 08846769.1
(22) Date de dépôt: 27.10.2008
(51) Int. Cl.: B29C 73/22, B60C 1/00, B60C 5/14, B60C 19/12

(54) **OBJET PNEUMATIQUE POURVU D'UNE COMPOSITION AUTO-OBTURANTE**
LUFTDRUCKARTIKEL MIT SELBSTVERSIEGELUNGSZUSAMMENSETZUNG
PNEUMATIC ARTICLE PROVIDED WITH A SELF-SEALING COMPOSITION

(30) Priorité: 09.11.2007 FR 0758895
(43) Date de publication de la demande: 28.07.2010
(73) Titulaire: Société de Technologie MICHELIN, 63000 Clermont-Ferrand (FR); MICHELIN Recherche et Technique S.A., 1763 Granges-Paccot (CH)
(72) Inventeur: MERINO LOPEZ, José, F-63200 Riom (FR); LESAGE, Pierre, F-63000 Clermont-Ferrand (FR); VOGE, Bozena, F-63800 Cournon d'Auvergne (FR)
(74) Mandataire: Ribière, Joel
(86) Numéro de dépôt international: PCT/EP2008/009072
(87) Numéro de publication internationale: WO 2009/059709

(56) Documents cités:
- EP-B- 1 090 069
- US-A1- 2004 031 550

## Description

La présente invention est relative aux compositions auto-obturantes *(self-sealing)* et à leur utilisation comme couches anti-crevaison dans tout type d'objet « pneumatique », c'est-à-dire, par définition, tout objet qui prend sa forme utilisable quand on le gonfle d'air.

Elle se rapporte plus particulièrement à l'utilisation de telles compositions dans des objets pneumatiques, notamment dans des bandages pneumatiques, pour obturer d'éventuels trous dus à des perforations en service.

Depuis quelques années, en particulier, les manufacturiers de bandages pneumatiques consentent des efforts particulièrement importants afin de développer des solutions originales à un problème datant du début même de l'utilisation des roues chaussées de bandages pneumatiques de type gonflés, à savoir comment permettre au véhicule de poursuivre sa route malgré une perte importante ou totale de pression d'un ou plusieurs bandages pneumatiques. Pendant des décennies, la roue de secours fut considérée comme la solution unique et universelle. Puis, plus récemment, les avantages considérables liés à sa suppression éventuelle sont apparus. Le concept de "mobilité étendue" se développe. Les techniques associées permettent de rouler avec le même bandage pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Des compositions auto-obturantes susceptibles de permettre d'atteindre un tel objectif, par définition aptes à assurer automatiquement, c'est-à-dire sans aucune intervention externe, l'étanchéité d'un bandage pneumatique en cas de perforation de ce dernier par un corps étranger tel qu'un clou, sont particulièrement difficiles à mettre au point.

Pour pouvoir être utilisable, une couche auto-obturante doit satisfaire à de nombreuses conditions de nature physique et chimique. Elle doit notamment être efficace dans une très large gamme de températures d'utilisation et ce pendant toute la durée de vie des bandages pneumatiques. Elle doit être capable d'obturer le trou lorsque l'objet perforant reste en place ; à l'expulsion de ce dernier, elle doit pouvoir combler le trou et rendre le bandage pneumatique étanche.

De nombreuses solutions ont été imaginées mais n'ont pu se développer dans les bandages pneumatiques pour véhicules notamment par manque de stabilité dans le temps ou d'efficacité dans des conditions extrêmes de température d'utilisation.

Pour contribuer à maintenir une bonne efficacité à haute température, le document US-A-4,113,799 (ou FR-A-2 318 042) a proposé comme couche auto-obturante une composition comportant une combinaison de caoutchoucs butyls de haute et basse masses moléculaires réticulés partiellement, en présence éventuellement d'une faible part d'élastomère thermoplastique styrénique. Pour une bonne efficacité d'obturation, ladite composition comporte de 55 à 70% en poids d'un agent tackifiant.

Le document US-A-4 228 839 a proposé comme couche auto-obturante pour pneumatique un mélange de caoutchouc contenant une première matière polymère qui se dégrade par irradiation, telle que du polyisobutylène, et une seconde matière polymère qui se réticule par irradiation, préférentiellement un caoutchouc butyl.

Le document US-A-4 426 468 a lui aussi proposé une composition auto-obturante pour pneumatique à base de caoutchouc butyl à très haute masse moléculaire, réticulé.

Un inconvénient connu des caoutchoucs butyls est qu'ils présentent des pertes hystérétiques importantes (niveau élevé de tanδ) sur un spectre large de température, inconvénient qui se répercute sur les compositions auto-obturantes elles-mêmes avec une forte augmentation de l'hystérèse et une pénalisation notable de la résistance au roulement des bandages pneumatiques.

Les Demanderesses ont constaté par ailleurs que ces compositions à base de caoutchouc butyl peuvent présenter en outre une efficacité insuffisante après l'expulsion ou le retrait différé d'un objet perforant resté en place pendant une longue période dans la structure du bandage pneumatique.

Le document EP-B1-1 090 069 a proposé quant à lui des compositions auto-obturantes dépourvues de caoutchouc butyl, dont la formulation spécifique comprend pour 100 parties en masse d'un élastomère thermoplastique à base de styrène, 80 à 140 parties d'un plastifiant liquide, 110 à 190 parties d'une résine tackifiante et de 2 à 20 parties d'un additif.

Poursuivant leurs recherches, les Demanderesses ont découvert une composition auto-obturante qui ne nécessite pas de caoutchouc butyl et présente dans un objet pneumatique une performance anti-crevaison améliorée par rapport aux compositions auto-obturantes de l'art antérieur, particulièrement lors d'une utilisation à une haute température. Comparativement aux compositions auto-obturantes usuelles, elle améliore notablement la vitesse d'obturation d'un trou lors du retrait, notamment différé, d'un objet perforant.

Ainsi, selon un premier objet, la présente invention concerne un objet pneumatique pourvu d'une couche anticrevaison comprenant, à titre de composition auto-obturante, une composition élastomère comportant au moins, à titre d'élastomère majoritaire, un élastomère thermoplastique styrénique (dit "TPS"), plus de 200 pce d'une huile d'extension et plus de 20 pce d'une résine hydrocarbonée dont la température de transition vitreuse (Tg) est supérieure à 0°C (pce = parties en poids pour cent parties d'élastomère).

De préférence, l'objet pneumatique de l'invention, notamment un bandage pneumatique, comporte également une couche étanche à l'air qui, associée à la couche anticrevaison ci-dessus, constitue un stratifié étanche à l'air et anti-crevaison particulièrement avantageux lorsque ledit stratifié est disposé par exemple sur la paroi interne dudit objet ou bandage pneumatique.

La présente invention concerne particulièrement les bandages pneumatiques destinés à équiper des véhicules à moteur de type tourisme ou grand tourisme, SUV *(Sport Utility Vehicles),* deux roues (notamment motos, vélos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

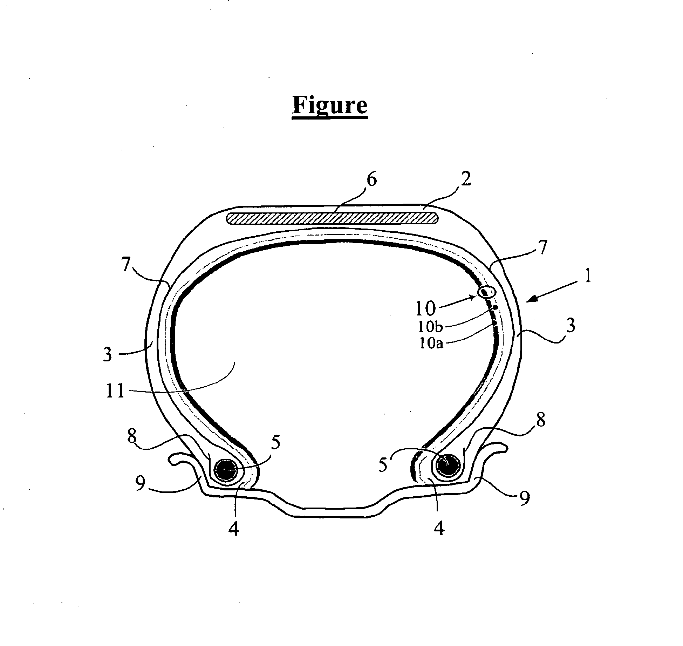

L'invention ainsi que ses avantages seront aisément compris à la lumière de la description et des exemples de réalisation qui suivent, ainsi que de la figure unique relative à ces exemples qui schématise en coupe radiale, un bandage pneumatique à armature de carcasse radiale utilisant une composition auto-obturante conformément à la présente invention.

### 1. DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I-1. Composition auto-obturante

La composition ou matière auto-obturante utilisée conformément à l'invention est une composition élastomère comportant au moins, à titre d'élastomère majoritaire, un élastomère thermoplastique styrénique et, à titre d'agents plastifiants, une huile d'extension selon un taux pondéral supérieur à 200 pce et plus de 20 pce d'une résine hydrocarbonée dont la Tg est supérieure à 0°C.

### I-1-A. Elastomère thermoplastique styrénique

Les élastomères thermoplastiques styréniques (en abrégé "TPS") sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés.

De préférence, l'élastomère TPS est choisi dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, ledit élastomère est choisi dans le groupe constitué par les copolymères SEBS, les copolymères SEPS et les mélanges de ces copolymères.

Selon un autre mode de réalisation préférentiel de l'invention, le taux de styrène, dans l'élastomère TPS, est compris entre 5 et 50%.

En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10 et 40%, en particulier entre 15 et 35%.

On préfère que la Tg (mesurée par DSC (*Differential Scanning Calorimetry*) selon ASTM D3418, 1999) de l'élastomère TPS soit inférieure à -20°C, plus préférentiellement inférieure à -40°C.

Une valeur de Tg supérieure à ces minima, impliquant une Tg plus élevée de la composition auto-obturante elle-même, peut diminuer les performances de la composition auto-obturante lors d'une utilisation à très basse température ; pour une telle utilisation, la Tg de l'élastomère TPS est plus préférentiellement encore inférieure à -50°C.

La masse moléculaire moyenne en nombre (notée Mn) de l'élastomère TPS est préférentiellement comprise entre 50 000 et 500 000 g/mol, plus préférentiellement comprise entre 75 000 et 450 000. En dessous des minima indiqués, la cohésion entre les chaînes d'élastomère TPS, en raison de sa dilution (quantité d'agent d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la composition, aux taux d'huile d'extension préconisés. Ainsi, on a constaté qu'une valeur comprise dans un domaine de 250 000 à 400 000 était particulièrement bien adaptée, notamment à une utilisation de la composition auto-obturante dans un bandage pneumatique.

La masse moléculaire moyenne en nombre (Mn) de l'élastomère TPS est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'élastomère TPS peut constituer la totalité de la matrice élastomère ou la majorité pondérale (de préférence pour plus de 50 %, plus préférentiellement pour plus de 70%) de cette dernière lorsqu'elle comporte un ou plusieurs autre(s) élastomère(s), thermoplastiques ou non, par exemple du type diéniques.

Selon un mode de réalisation préférentiel, l'élastomère TPS est le seul élastomère, et le seul élastomère thermoplastique présent dans la composition auto-obturante.

Des élastomères TPS tels que par exemple SEPS ou SEBS, étendus notamment avec de forts taux d'huiles, sont bien connus et disponibles commercialement. A titre d'exemples de TPS commerciaux sous forme étendue, on peut citer les produits commercialisés par la société Vita Thermoplastic Elastomers ou VTC ("VTC TPE group") sous la dénomination "Dryflex" (e.g. "Dryflex 967100") ou "Mediprene" (e.g. "Mediprene 500 000M"), ceux vendus par Multibase sous dénomination "Multiflex" (e.g. "Multiflex G00"). Ces produits, développés notamment pour des applications médicales, pharmaceutiques ou cosmétiques, peuvent être mis en oeuvre de façon classique pour des TPE, par extrusion ou moulage, par exemple à partir d'une matière première disponible sous la forme de billes ou de granulés.

Bien entendu, les élastomères TPS sont également disponibles sous forme non étendue. A titre d'exemples, on peut citer les élastomères de type SEBS ou SEPS commercialisés par la société Kraton sous la dénomination "Kraton G" (e.g. produits G1650, G1651, G1654, G 1730) ou la société Kuraray sous la dénomination "Septon" (e.g. S2005, S2006, S8004, S8006).

Ces élastomères TPS se sont révélés capables, après ajustement de leur taux d'huile d'extension et ajout d'une résine hydrocarbonée, dans les domaines préconisés, de remplir la fonction d'une composition auto-obturante performante, comme cela est expliqué en détail dans la suite de l'exposé.

### I-1-B. Huile d'extension

Le deuxième constituant essentiel de la composition auto-obturante est une huile d'extension (ou huile plastifiante) utilisée à un taux très élevé, supérieur à 200 pce - soit plus de 200 parties en poids pour cent parties d'élastomère total (i.e., élastomère TPS plus élastomère(s) complémentaire(s) le cas échéant) -, de préférence supérieur à 250 pce.

On peut utiliser toute huile d'extension, de préférence à caractère faiblement polaire, apte à étendre, plastifier des élastomères, notamment thermoplastiques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, l'huile d'extension est choisie dans le groupe constitué par les polybutènes, les huiles paraffiniques, et les mélanges de ces huiles. On utilise tout particulièrement une huile polyisobutène, en particulier polyisobutylène ("PIB").

A titre d'exemples, des huiles polyisobutylène sont commercialisées notamment par la société Univar sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par Exxon sous la dénomination "Telura 618" ou par Repsol sous la dénomination "Extensol 51 ".

La masse moléculaire moyenne en nombre (Mn) de l'huile d'extension est préférentiellement comprise entre 200 et 30 000 g/mol, plus préférentiellement encore comprise entre 300 et 10 000 g/mol. Pour des masses Mn trop basses, il existe un risque de migration de l'huile à l'extérieur de la composition auto-obturante, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la composition auto-obturante, notamment de l'objet pneumatique dans lequel elle est destinée à être utilisée.

On préfère que le taux d'huile d'extension soit compris entre 200 et 700 pce, plus préférentiellement entre 250 et 600 pce. En dessous du minimum indiqué, la composition auto-obturante risque de présenter une rigidité trop forte pour certaines applications tandis qu'au-delà du maximum préconisé, on s'expose à un risque de cohésion insuffisante de la composition. Pour cette raison, le taux d'huile d'extension est plus préférentiellement compris entre 300 et 500 pce, notamment pour une utilisation de la composition auto-obturante dans un bandage pneumatique.

### I-1-C. Résine hydrocarbonée

Le troisième constituant essentiel de la composition auto-obturante est une résine hydrocarbonée dont la Tg est supérieure à 0°C, de préférence supérieure à + 20°C, ladite résine étant utilisée à un taux pondéral supérieur à 20 pce, de préférence supérieur à 30 pce, notamment au moins égal à 50 pce.

De manière connue de l'homme du métier, la dénomination "résine" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé) avec la composition d'élastomère à laquelle il est destiné, de manière à agir comme un véritable agent diluant.

Les résines hydrocarbonées sont des polymères bien connus de l'homme du métier, utilisables en particulier comme agents plastifiants ou agents tackifiants dans des matrices polymériques. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Selon un mode de réalisation particulier de l'invention, la résine hydrocarbonée présente au moins une quelconque des caractéristiques suivantes :
- une Tg supérieure à 20°C, notamment supérieure à 30°C;
- une masse moléculaire moyenne en nombre (Mn) comprise entre 400 et 2000 g/mol, notamment entre 500 et 1500 g/mol ;
- un indice de polymolécularité (Ip) inférieur à 3, notamment inférieur à 2 (rappel: Ip = Mw/Mn avec Mw masse moléculaire moyenne en poids).

Plus particulièrement, cette résine hydrocarbonée présente l'ensemble des caractéristiques ci-dessus.

La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C; concentration 1 g/l; débit 1 ml/min; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, le phénol, l'alpha- méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer encore les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac" ou par Kolon sous dénomination "Hikorez" pour ce qui concerne les résines coupe C₅/ styrène ou coupe C₅/ coupe C₉, ou encore par la société Struktol sous dénomination "40 MS" ou "60 NS" (mélanges de résines aromatiques et/ou aliphatiques).

Le taux de résine hydrocarbonée est préférentiellement compris entre 20 et 200 pce, plus préférentiellement dans un domaine de 50 à 150 pce. En dessous de ces minima, la performance anticrevaison peut s'avérer insuffisante à haute température, typiquement supérieure à 70°C, alors qu'au-delà des maxima préconisés, on s'expose à une tenue mécanique et/ou thermique insuffisante du matériau.

### I-1-D. Additifsdivers

Les trois constituants précédemment décrits, à savoir élastomère TPS, huile d'extension et résine plastifiante hydrocarbonée sont suffisants à eux seuls pour que la composition auto-obturante remplisse totalement sa fonction anti-crevaison vis-à-vis des objets pneumatiques dans lesquels elle est utilisée.

Toutefois, divers autres additifs peuvent être ajoutés, typiquement en faible quantité (préférentiellement à des taux inférieurs à 20 pce, plus préférentiellement inférieurs à 10 pce), comme par exemple des charges renforçantes tels que du noir de carbone, des charges non renforçantes ou inertes, des charges lamellaires, des agents de protection tels que des anti-UV, anti-oxydants ou anti-ozonants, divers autres stabilisants, des agents colorants avantageusement utilisables pour la coloration de la composition auto-obturante.

Outre les élastomères (TPS et autres élastomères éventuels) précédemment décrits, la composition auto-obturante pourrait aussi comporter, toujours selon une fraction pondérale minoritaire par rapport à l'élastomère TPS, des polymères autres que des élastomères, tels que par exemple des polymères thermoplastiques compatibles avec l'élastomère TPS.

### I-2. Utilisation de la composition auto-obturante comme couche anti-crevaison

La composition ou matière auto-obturante précédemment décrite est un composé solide (à 23°C) et élastique, qui se caractérise notamment, grâce à sa formulation spécifique, par une très haute souplesse et déformabilité.

Elle peut être utilisée comme couche anti-crevaison dans tout type d'objet "pneumatique", c'est-à-dire, par définition, tout objet qui prend sa forme utilisable quand on le gonfle d'air.

A titre d'exemples de tels objets pneumatiques, on peut citer les bateaux pneumatiques, les ballons ou balles utilisées pour le jeu ou le sport.

Elle est particulièrement bien adaptée à une utilisation comme couche anti-crevaison dans un objet pneumatique, produit fini ou semi-fini, en caoutchouc, tout particulièrement dans un bandage pneumatique pour véhicule automobile tel qu'un véhicule de type deux roues, tourisme ou industriel, ou non automobile tel que vélo.

Une telle couche anti-crevaison est préférentiellement disposée sur la paroi interne de l'objet pneumatique, la recouvrant totalement ou au moins en partie, mais elle peut être également intégrée complètement à sa structure interne.

L'épaisseur de la couche anti-crevaison est préférentiellement supérieure à 0,3 mm, plus préférentiellement comprise entre 0,5 mm et 10 mm (en particulier entre 1 et 5 mm).

On comprendra aisément que, selon les domaines d'application spécifiques, les dimensions et les pressions en jeu, le mode de mise en oeuvre de l'invention peut varier, la couche anti-crevaison comportant alors plusieurs gammes d'épaisseur préférentielles. Ainsi par exemple, pour des bandages pneumatiques de type tourisme, elle peut avoir une épaisseur d'au moins 0,5 mm, préférentiellement comprise entre 1 et 5 mm. Selon un autre exemple, pour des bandages pneumatiques de véhicules poids lourds ou agricole, l'épaisseur préférentielle peut se situer entre 1 et 6 mm. Selon un autre exemple, pour des bandages pneumatiques de véhicules dans le domaine du génie civil ou pour avions, l'épaisseur préférentielle peut se situer entre 2 et 10 mm. Enfin, selon un autre exemple, pour des bandages pneumatiques de vélo, l'épaisseur préférentielle peut se situer entre 0,4 et 2 mm.

La composition auto-obturante ici décrite a l'avantage de ne présenter, dans une très large gamme de températures d'utilisation des bandages pneumatiques, pratiquement aucune pénalisation en termes de résistance au roulement par rapport à un bandage pneumatique ne comportant pas une telle couche auto-obturante ; comparativement aux compositions auto-obturantes usuelles, elle améliore très notablement la vitesse d'obturation du trou, en particulier lors du retrait différé d'un objet perforant.

D'autre part, les compositions auto-obturantes usuelles présentent une aptitude importante au fluage. Lors du roulage des bandages pneumatiques, elles sont souvent chassées de la partie flanc de ces bandages sous l'effet des forces centrifuges et s'accumulent sous leur partie sommet. Ce n'est pas le cas pour les compositions préconisées par la présente invention qui peuvent être disposées dans toute la partie intérieure des bandages pneumatiques.

Enfin, de manière tout à fait inattendue, la composition auto-obturante ici décrite a révélé des performances anti-crevaison très nettement améliorées lors d'une utilisation à température élevée, typiquement supérieure à 70°C voire plus, telle que celles rencontrées par exemple lors d'un roulage soutenu d'un bandage pneumatique à très haute vitesse.

Bien entendu, l'invention s'applique aux cas où la composition auto-obturante précédemment décrite est utilisée dans un bandage ou tout autre objet pneumatique sans être nécessairement combinée à une couche étanche à l'air.

Toutefois, selon un mode particulier et préférentiel de réalisation de l'invention, la composition auto-obturante est associée à au moins une seconde couche étanche à l'air, pour constituer un produit stratifié multi-couches, auto-obturant et étanche à l'air, utilisable notamment comme paroi interne d'un objet pneumatique tel qu'un bandage pneumatique.

La seconde couche du stratifié peut comporter tout type de matériau susceptible de remplir la fonction de film étanche à l'air (ou plus généralement aux gaz), qu'il s'agisse par exemple d'un matériau métallique ou d'un matériau polymère. De préférence, cette couche étanche à l'air a une épaisseur supérieure à 0,05 mm, plus préférentiellement comprise entre 0,05 et 6 mm (par exemple de 0,1 à 2 mm).

Selon un mode de réalisation préférentiel, cette seconde couche étanche à l'air comporte une composition de caoutchouc butyl. Par caoutchouc butyl, doit être entendu de manière connue un copolymère d'isobutylène et d'isoprène (en abrégé IIR), ainsi que les versions halogénées, de préférence chlorées ou bromées, de ce type de copolymère. De préférence, le caoutchouc butyl est un caoutchouc butyl halogéné ou un coupage de butyls halogéné et non halogéné. Le caoutchouc butyl peut être utilisé seul ou en association avec un ou plusieurs autre(s) élastomère(s), notamment élastomères diénique(s) tels que par exemple du caoutchouc naturel ou un polyisoprène synthétique. La composition étanche à l'air comporte par ailleurs les divers additifs usuellement présents dans les couches étanches à l'air connues de l'homme du métier, tels que des charges renforçantes comme le noir de carbone, des charges lamellaires améliorant l'étanchéité (e.g. phyllosilicates tels que kaolin, talc, mica, argiles ou argiles modifiées *("organo clays")),* des agents de protection tels que antioxydants ou antiozonants, un système de réticulation (par exemple à base de soufre ou de peroxyde), divers agents de mise en oeuvre ou autres stabilisants.

Les deux couches du stratifié ci-dessus peuvent être assemblées par tout moyen approprié, par exemple par un simple traitement thermique, de préférence sous pression (par exemple quelques min à 150°C sous 16 bars), à l'aide de divers agents adhésifs ou encore en intercalant une troisième couche adhésive solidarisant les deux autres.

### II. EXEMPLE DE REALISATION DE L'INVENTION

La composition auto-obturante et le stratifié multicouches décrits précédemment sont avantageusement utilisables dans les bandages pneumatiques de tous types de véhicules, en particulier dans les bandages pour véhicules tourisme susceptibles de rouler à très haute vitesse ou les bandages pour véhicules industriels tels que Poids-lourd susceptibles de rouler et fonctionner sous des conditions de températures internes particulièrement élevées.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le bandage pneumatique 1 est caractérisé en ce que sa paroi interne comporte un stratifié multi-couches (10) comportant au moins deux couches (10a, 10b), auto-obturant grâce à sa première couche (10a) et étanche à l'air grâce à sa seconde couche (10b).

Conformément à un mode de réalisation préférentiel de l'invention, les deux couches (10a, 10b) couvrent substantiellement toute la paroi interne du bandage pneumatique, se prolongeant d'un flanc à l'autre, au moins jusqu'au niveau du crochet de jante lorsque le bandage pneumatique est en position montée. Selon d'autres modes de réalisation possibles, la couche 10a pourrait toutefois recouvrir uniquement une partie de la zone étanche à l'air (couche 10b), par exemple seulement la zone sommet du bandage pneumatique ou s'étendre au moins de la zone sommet jusqu'aux épaules ou jusqu'à mi-flanc (équateur) dudit bandage.

Selon un autre mode de réalisation préférentiel, le stratifié est disposé de telle manière que la première couche (10a) auto-obturante soit radialement la plus externe dans le bandage pneumatique, par rapport à l'autre couche (10b), comme schématisé sur la figure annexée. En d'autres termes, la couche (10a) auto-obturante recouvre la couche (10b) étanche à l'air du côté de la cavité interne 11 du bandage pneumatique 1. Un autre mode de réalisation possible est celui où cette couche (10a) est radialement la plus interne, disposée alors entre la couche étanche (10b) et le reste de la structure du bandage 1.

Dans cet exemple, la couche 10b (d'épaisseur 0,7 à 0,8 mm) est à base de caoutchouc butyl, présente une formulation conventionnelle pour une "gomme intérieure" *("inner liner")* qui définit usuellement, dans un bandage pneumatique conventionnel, la face radialement interne dudit bandage destinée à protéger l'armature de carcasse de la diffusion d'air provenant de l'espace intérieur au bandage. Cette couche 10b étanche à l'air permet donc le gonflement et le maintien sous pression du bandage 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La couche 10a est quant à elle constituée d'une composition auto-obturante comportant les trois constituants essentiels que sont un élastomère SEBS ("G1654" de la société Kraton) (avec un taux de styrène d'environ 30%, une Tg proche de -60°C et une valeur Mn de l'ordre de 150 000 g/mol), une huile d'extension polyisobutylène ("Dynapak 190" de la société Univar - Mn de l'ordre de 1000 g/mol) à un taux pondéral d'environ 400 pce, et une résine hydrocarbonée du type aromatique (Struktol® "40MS Flakes" de la société Struktol) à un taux pondéral d'environ 100 pce.

La composition auto-obturante ci-dessus a été préparée comme suit. Le mélange des trois constituants (SEBS, huile et résine) a été réalisé de manière conventionnelle, à l'aide d'une extrudeuse bi-vis (L/D = 40), à une température typiquement supérieure à la température de fusion de la composition (environ 190°C). L'extrudeuse utilisée comportait deux alimentations (trémies) différentes (SEBS d'une part, résine d'autre part) et une pompe d'injection liquide sous pression pour l'huile d'extension polyisobutylène ; elle était pourvue d'une filière permettant d'extruder le produit aux dimensions souhaitées.

La couche 10a, disposée donc entre la couche 10b et la cavité 11 du pneumatique, permet de procurer au pneumatique une protection efficace contre les pertes de pression dues aux perforations accidentelles, en permettant l'obturation automatique de ces perforations.

Si un corps étranger tel qu'un clou traverse la structure de l'objet pneumatique, par exemple une paroi telle qu'un flanc 3 ou le sommet 6 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante permettait de supporter sans problème les efforts des parois environnantes, même lors des phases de déformations du bandage pneumatique chargé et en roulage.

Le pneumatique pourvu de sa couche anti-crevaison (10a) tel que décrit ci-dessus peut être réalisé avant ou après vulcanisation (ou cuisson).

Dans le premier cas (i.e., avant cuisson du bandage pneumatique), la composition auto-obturante est simplement appliquée de façon conventionnelle à l'endroit souhaité, pour formation de la couche 10a. La vulcanisation est ensuite effectuée classiquement. Les élastomères TPS supportent bien les contraintes liées à l'étape de vulcanisation.

Une variante de fabrication avantageuse, pour l'homme du métier des bandages pneumatiques, consistera par exemple au cours d'une première étape, à déposer à plat la composition auto-obturante directement sur un tambour de confection, sous la forme d'une couche *("skim")* d'épaisseur adaptée (par exemple 2 à 6 mm), avant de recouvrir cette dernière avec la couche étanche à l'air puis le reste de la structure du bandage pneumatique, selon des techniques de fabrication bien connues de l'homme du métier. Ce type de procédé permet en outre de réaliser aisément le second mode de réalisation dans lequel la couche d'étanchéité 10b serait radialement la plus externe.

Dans le second cas (i.e., après cuisson du bandage pneumatique), la composition auto-obturante est appliquée à l'intérieur du bandage pneumatique cuit par tout moyen approprié, par exemple par collage, par pulvérisation ou encore extrusion et soufflage d'un film d'épaisseur appropriée.

Lors d'essais, deux bandages pneumatiques (dimensions "27/68-18") montés à l'arrière d'un véhicule sport (Porsche 997) ont été testés. La paroi interne d'un des bandages pneumatiques (comportant déjà la couche étanche à l'air 10b) a été recouverte, d'épaule à épaule, par la couche auto-obturante (10a) précédemment décrite, d'une épaisseur de 4,5 mm, puis les pneumatiques vulcanisés.

Les bandages pneumatiques, équipés de capteurs de pression et température, ont d'abord subi un pré-roulage à haute vitesse, de durée suffisante pour les amener à leur température de fonctionnement (température interne supérieure à +70°C).

Puis, sur le bandage pneumatique conforme à l'invention (comportant la couche auto-obturante) à l'état chaud, quatre perforations de 6 mm de diamètre et deux perforations de 2 mm de diamètre ont été réalisées, à travers la bande de roulement et le bloc sommet, à l'aide de poinçons qui ont été immédiatement retirés.

Le roulage a été repris immédiatement. De manière inattendue, ce bandage a résisté à un roulage à 180 km/h pendant 1 heure, sans perte de pression, durée au-delà de laquelle le roulage a été stoppé.

Sans composition auto-obturante et dans les mêmes conditions que ci-dessus, le bandage pneumatique témoin (ne comportant pas de composition auto-obturante) perforé de la même manière perd sa pression en moins d'une minute, devenant totalement inapte au roulage.

La même expérience a été ensuite réalisée en abaissant à environ 100 pce (i.e., en réduisant d'un facteur quatre environ) le taux d'huile PIB ("Dynapak 190") dans une composition par ailleurs identique à celle précédemment décrite, comportant l'élastomère SEBS ("G1654"), l'huile d'extension et les 100 pce de résine hydrocarbonée (Struktol® "40MS Flakes"). Le bandage pneumatique témoin correspondant, ne se distinguant par conséquent du bandage conforme à l'invention précédent que par son taux d'huile d'extension inférieur à 200 pce, a été perforé de la même manière mais tout d'abord à froid et en statique (i.e., sans pré-roulage) : ce bandage témoin s'est avéré perdre sa pression de gonflage en moins de trois minutes, un tel résultat le rendant, bien entendu, totalement inapte à un test de roulage à chaud sur véhicule.

## Revendications

1. Objet pneumatique pourvu d'une couche anticrevaison comprenant, à titre de composition auto-obturante, une composition élastomère comportant au moins, à titre d'élastomère majoritaire, un élastomère thermoplastique styrénique (dit "TPS"), plus de 200 pce d'une huile d'extension et plus de 20 pce d'une résine hydrocarbonée dont la température de transition vitreuse (Tg) est supérieure à 0°C.

2. Objet selon la revendication 1, dans lequel l'élastomère TPS est choisi dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

3. Objet selon la revendication 2, dans lequel l'élastomère TPS est choisi dans le groupe constitué par les copolymères SEBS, les copolymères SEPS et les mélanges de ces copolymères.

4. Objet selon l'une quelconque des revendications 1 à 3, dans lequel l'élastomère TPS comprend entre 5 et 50% en masse de styrène.

5. Objet selon l'une quelconque des revendications 1 à 4, dans lequel la température de transition vitreuse (Tg) de l'élastomère TPS est inférieure à - 20°C.

6. Objet selon l'une quelconque des revendications 1 à 5, dans lequel la masse moléculaire moyenne en nombre (Mn) de l'élastomère TPS est comprise entre 50 000 et 500 000 g/mol.

7. Objet selon l'une quelconque des revendications 1 à 6, dans lequel l'huile d'extension est choisie dans le groupe constitué par les huiles polyoléfiniques, les huiles paraffiniques, les huiles naphténiques, les huiles aromatiques, les huiles minérales, et les mélanges de ces huiles.

8. Objet selon la revendication 7, dans lequel l'huile d'extension est choisie dans le groupe constitué par les polybutènes, les huiles paraffiniques et les mélanges de ces huiles.

9. Objet selon l'une quelconque des revendications 1 à 8, dans lequel la masse moléculaire moyenne en nombre (Mn) de l'huile d'extension est comprise entre 200 et 30 000 g/mol.

10. Objet selon l'une quelconque des revendications 1 à 9, dans lequel le taux d'huile d'extension est compris entre 200 et 700 pce.

11. Objet selon l'une quelconque des revendications 1 à 10, dans lequel le taux de résine hydrocarbonée est compris entre 20 et 200 pce.

12. Objet selon l'une quelconque des revendications 1 à 11, dans lequel la résine hydrocarbonée a une Tg supérieure à + 20°C.

13. Objet selon l'une quelconque des revendications 1 à 12, dans lequel la masse moléculaire moyenne en nombre (Mn) de la résine hydrocarbonée est comprise entre 400 et 2 000 g/mol.

14. Objet selon l'une quelconque des revendications 1 à 13, dans lequel la résine hydrocarbonée est choisie dans le groupe constitué par les résines d'homopolymère ou copolymère de cyclopentadiène (CPD) ou dicyclopentadiène (DCPD), les résines d'homopolymère ou copolymère terpène, les résines d'homopolymère ou copolymère de coupe C5, et les mélanges de ces résines.

15. Objet selon l'une quelconque des revendications 1 à 14, dans lequel l'objet pneumatique est un bandage pneumatique.

## Claims

1. Inflatable article provided with a puncture-resistant layer comprising, by way of a self-sealing composition, an elastomer composition comprising at least, as predominant elastomer, a thermoplastic styrene (TPS) elastomer, more than 200 phr of an extender oil and more than 20 phr of a hydrocarbon resin, the glass transition temperature (Tg) of which is greater than 0°C.

2. Article according to Claim 1, in which the TPS elastomer is chosen from the group consisting of styrene/butadiene/styrene (SBS), styrene/isoprene/styrene (SIS), styrene/butadiene/isoprene/styrene (SBIS), styrene/isobutylene/styrene (SIBS), styrene/ethylenebutylene/styrene (SEBS), styrene/ethylenepropylene/styrene (SEPS) and styrene/ethylene-ethylenepropylene/styrene (SEEPS) block copolymers and blends of these copolymers.

3. Article according to Claim 2, in which the TPS elastomer is chosen from the group formed by SEBS copolymers, SEPS copolymers and blends of these copolymers.

4. Article according to any one of Claims 1 to 3, in which the TPS elastomer comprises between 5 and 50% styrene by weight.

5. Article according to any one of Claims 1 to 4, in which the glass transition temperature (Tg) of the TPS elastomer is below -20°C.

6. Article according to any one of Claims 1 to 5, in which the number-average molecular weight (Mₙ) of the TPS elastomer is between 50 000 and 500 000 g/mol.

7. Article according to any one of Claims 1 to 6, in which the extender oil is chosen from the group formed by polyolefin oils, paraffinic oils, naphthenic oils, aromatic oils, mineral oils and mixtures of these oils.

8. Article according to Claim 7, in which the extender oil is chosen from the group formed by polybutenes, paraffinic oils and mixtures of these oils.

9. Article according to any one of Claims 1 to 8, in which the number-average molecular weight (Mₙ) of the extender oil is between 200 and 30 000 g/mol.

10. Article according to any one of Claims 1 to 9, in which the extender oil content is between 200 and 700 phr.

11. Article according to any one of Claims 1 to 10, in which the hydrocarbon resin content is between 20 and 200 phr.

12. Article according to any one of Claims 1 to 11, in which the hydrocarbon resin has a Tg greater than +20°C.

13. Article according to any one of Claims 1 to 12, in which the number-average molecular weight (Mₙ) of the hydrocarbon resin is between 400 and 2 000 g/mol.

14. Article according to any one of Claims 1 to 13, in which the hydrocarbon resin is chosen from the group formed by cyclopentadiene (CPD) or dicyclopentadiene (DCPD) homopolymer or copolymer resins, terpene homopolymer or copolymer resins, C₅-cut homopolymer or copolymer resins, and blends of these resins.

15. Article according to any one of Claims 1 to 14, in which the inflatable article is a pneumatic tyre.

## Patentansprüche

1. Luftgefüllter Gegenstand, der mit einer Schicht versehen ist, welche vor einem ungewollten Entweichen der Luft schützt und als selbstversiegelnde Zusammensetzung eine Elastomerzusammensetzung umfasst, die als Hauptelastomer mindestens ein thermoplastisches Styrolelastomer (mit der Bezeichung "TPS"), mehr als 200 phr eines Strecköls und mehr als 20 phr eines Kohlenwasserstoffharzes, dessen Glasübergangstemperatur (Tg) mehr als 0 °C beträgt, aufweist.

2. Gegenstand nach Anspruch 1, wobei das Elastomer TPS aus der Gruppe gewählt ist, die aus den Blockcopolymeren Styrol/Butadien/Styrol (SBS), Styrol/Isopren/Styrol (SIS), Styrol/Butadien/Isopren/Styrol (SBIS), Styrol/Isobutylen/Styrol (SIBS), Styrol/Ethylen/Butylen/Styrol (SEBS), Styrol/Ethylen/Propylen/Styrol (SEPS), Styrol/Ethylen/Ethylen/Propylen/Styrol (SEEPS) und den Mischungen dieser Copolymere besteht.

3. Gegenstand nach Anspruch 2, wobei das Elastomer TPS aus der Gruppe ausgewählt ist, die aus den SEBS-Copolymeren, den SEPS-Copolymeren und den Mischungen dieser Copolymere besteht.

4. Gegenstand nach einem beliebigen der Ansprüche 1 bis 3, wobei das Elastomer TPS 5 bis 50 Gewichts-% an Styrol umfasst.

5. Gegenstand nach einem beliebigen der Ansprüche 1 bis 4, wobei die Glasübergangstemperatur (Tg) des Elastomers TPS niedriger als -20 °C ist.

6. Gegenstand nach einem beliebigen der Ansprüche 1 bis 5, wobei das Zahlenmittel des Molekulargewichts (Mn) des Elastomers TPS im Bereich von 50.000 bis 500.000 g/mol liegt.

7. Gegenstand nach einem beliebigen der Ansprüche 1 bis 6, wobei das Strecköl aus der Gruppe ausgewählt ist, die aus den polyolefinischen Ölen, den Paraffinölen, den naphthenischen Ölen, den aromatischen Ölen, den Mineralölen und den Mischungen dieser Öle besteht.

8. Gegenstand nach Anspruch 7, wobei das Strecköl aus der Gruppe ausgewählt ist, die aus den Polybutenen, den Paraffinölen und den Mischungen dieser Öle besteht.

9. Gegenstand nach einem beliebigen der Ansprüche 1 bis 8, wobei das Zahlenmittel des Molekulargewichts (Mn) des Strecköls im Bereich von 200 bis 30.000 g/mol liegt.

10. Gegenstand nach einem beliebigen der Ansprüche 1 bis 9, wobei der Gehalt an Strecköl im Bereich von 200 bis 700 phr liegt.

11. Gegenstand nach einem beliebigen der Ansprüche 1 bis 10, wobei der Gehalt an Kohlenwasserstoffharz im Bereich von 20 bis 200 phr liegt.

12. Gegenstand nach einem beliebigen der Ansprüche 1 bis 11, wobei das Kohlenwasserstoffharz eine Tg von mehr als +20 °C hat.

13. Gegenstand nach einem beliebigen der Ansprüche 1 bis 12, wobei das Zahlenmittel des Molekulargewichts (Mn) des Kohlenwasserstoffharzes im Bereich von 400 bis 2.000 g/mol liegt.

14. Gegenstand nach einem beliebigen der Ansprüche 1 bis 13, wobei das Kohlenwasserstoffharz aus der Gruppe ausgewählt ist, die aus den Homopolymer- oder Copolymerharzen von Cyclopentadien (CPD) oder Dicyclopentadien (DCPD), den Terpen-Homopolymer- oder Copolymerharzen, den Homopolymer- oder Copolymerharzen von C5-Fraktionen und den Mischungen dieser Harze besteht.

15. Gegenstand nach einem beliebigen der Ansprüche 1 bis 14, wobei der luftgefüllte Gegenstand ein Reifen ist.
